# EUROPEAN PATENT APPLICATION

(11) **EP 2 993 362 A1**
(43) Date of publication of application: **09.03.2016**
(21) Application number: 14183251.9
(22) Date of filing: 02.09.2014
(51) Int. Cl.: F16B 39/10, F16B 39/02

(54) **Method and device for locking screws**

(71) Applicant: Caterpillar Energy Solutions GmbH, 68167 Mannheim (DE)
(72) Inventor: Guisasola, Íñigo, 76829 Landau in der Pfalz (DE)
(74) Representative: Kramer Barske Schmidtchen Patentanwälte PartG mbB

(57) **Abstract**

The present disclosure generally relates to a method and an anti-rotation member (48) for locking at least two mounting screws (34) against rotation. The at least two mounting screws (34) may be configured to connect a first member (30) to a second member (20), wherein each of the two mounting screws (34) has a screw head (36). The disclosed method may comprise disposing a plastically deformable anti-rotation member (48) at each of the screw heads (36) of the at least two mounting screws (34), and plastically deforming the anti-rotation member (48) such that the anti-rotation member (48) engages the screw heads (36) of the at least two mounting screws (34) for locking the at least to mounting screws (34) against rotation.

## Description

### Technical Field

The present disclosure generally relates to a method and device for locking a plurality screws against rotation and, particularly, to a method and device for mechanically locking a plurality of screws against rotation.

### Background

For rotationally locking screws, it is known to, for example, apply a screw glue onto the screw threads and then the screw may be screwed into a tapped hole. The applied screw glue may then cure and a rotationally locked screw connection may be achieved. When disassembling such screw connection, the cured screw glue may be destroyed such that the screw may not be re-used again.

WO 2012/131215 A1 discloses an engine flywheel equipped with means for retaining bolts that attach the flywheel to a crankshaft. An inertia wheel is intended to be fixed to the end of the crankshaft by bolts fitted into orifices of the inertia wheel. The means for retaining the bolts comprise deformable means extending radially in the orifices for the passage of the bolts and pressing against the bolts in order to keep them in axial position.

The present disclosure is directed, at least in part, to improving or overcoming one or more aspects of prior systems.

### Summary of the Disclosure

According to an aspect of the present disclosure, a method for locking at least two mounting screws against rotation is disclosed. The at least two mounting screws may be configured to connect a first member to a second member, wherein each of the two mounting screws may have a screw head. The disclosed method may comprise disposing a plastically deformable anti-rotation member at each of the screw heads of the at least two mounting screws, and plastically deforming the anti-rotation member such that the anti-rotation member engages the screw heads of the at least two mounting screws for locking the at least to mounting screws against rotation.

According to another aspect to the present disclosure, an anti-rotation member for locking at least two mounting screws against rotation is disclosed. The at least two mounting screws may be configured to connect a first member to a second member, wherein each of the two mounting screws may have a screw head. The disclosed anti-rotation member may comprise at least two protrusions each configured to at least partially match with an associated one of the screw heads for locking the at least to mounting screws against rotation.

In some embodiments, the step of plastically deforming the anti-rotation member may include driving the anti-rotation member at least partially into an associated inner hexagonal socket of one of the at least two mounting screws.

In some embodiments, at least one of the at least two protrusions may be configured to engage an inner hexagonal socket of at least one of the at least two mounting screws.

In some embodiments, the anti-rotation member may be pre-deformed such that at least one of the at least two protrusion may be at least partially pre-manufactured by, for example, deep-drawing. Providing the anti-rotation member with at least one at least partially pre-manufactured protrusion may facilitate plastically deforming the anti-rotation member for engaging the associated screw head. For instance, the pre-manufactured protrusion may have a shape and position already substantially corresponding to the shape of the associated screw head to be engaged. Then, by plastically deforming the protrusion, the end shape of the protrusion may match with the associated screw head for engaging the same and, hence, prevent rotation of the associated mounting screw. Specifically, by at least partially pre-manufacturing at least one of the at least two protrusions, the deforming forces necessary for plastically deforming the anti-rotation member may be reduced.

Other features and aspects of this disclosure will be apparent from the following description and the accompanying drawings.

### Brief Description of the Drawings

Fig. 1 illustrates a sectional view of a torsional damping device attached to a crankshaft of an internal combustion engine via a flange element using mounting screws prior locking the mounting screws against rotation;
Fig. 2 illustrates a sectional view of the flange element and the crankshaft of Fig 1 with an exemplary disclosed anti-rotation member attached to the flange element prior locking the mounting screws against rotation;
Fig. 3 illustrates an enlarged view of the anti-rotation member of a portion III of Fig. 2 after rotationally locking the mounting screws against rotation; and
Fig. 4 illustrates a sectional view of the torsional damping device attached to the crankshaft via the flange element with the mounting screws locked by an exemplary disclosed anti-rotation member against rotation.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based at least in part on the realization that plastically deforming an anti-rotation member for engaging screw heads of at least two mounting screws connecting a first member to a second member may lock each of the mounting screws against rotation. Thus, the at least two mounting screws may retain their desired tightened state, even when the first and second members experience any vibrations or alternating loads.

In the following, the method and device for locking at least two mounting screws against rotation of the present disclosure is described with respect to a connection between a torsional damping device 10 and a crankshaft 20 of an internal combustion engine. However, the exemplary disclosed method and device for locking at least two mounting screws against rotation may also be applied to any connection where at least two screws connect two members with each other.

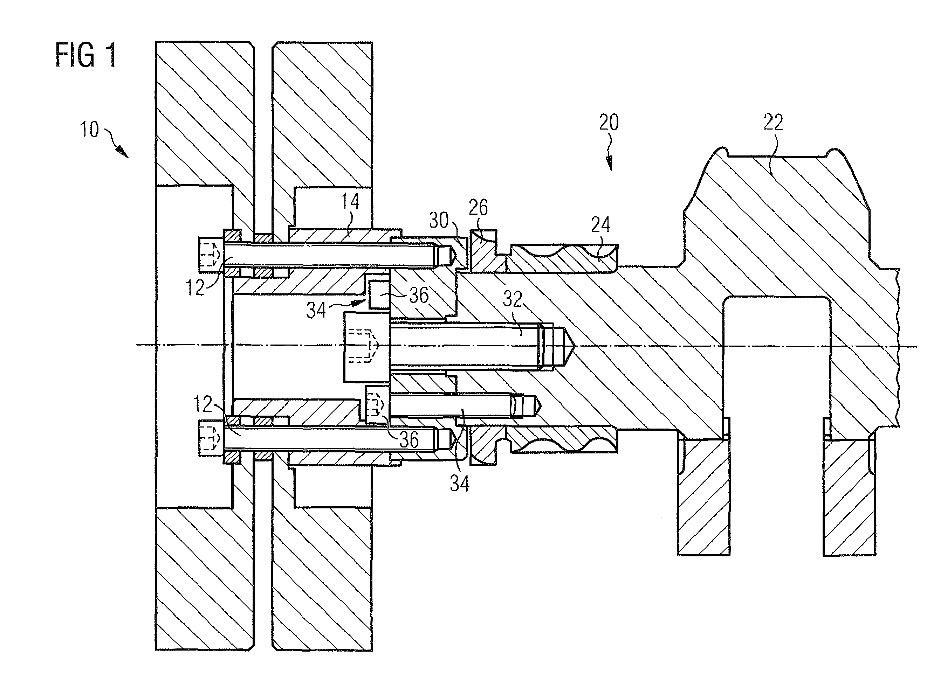

Referring to Fig. 1, a sectional view of the torsional damping device 10 attached to the crankshaft 20 of an internal combustion engine via a flange member 30 is shown. Particularly, as illustrated in Fig. 1, the flange member 30 is attached to the crankshaft 20 via a central attaching screw 32 and a plurality of mounting screws 34. In the exemplary embodiment shown in Fig. 1, there are provided in total nine mounting screws 34, which are symmetrically disposed on a circle extending about the attaching screw 32. Therefore, the sectional view of Fig. 1 only depicts one mounting screw 34 in a cut state, whereas another screw head of a further mounting screw 34 is illustrated, which lies behind the sectional plane of Fig. 1. In some embodiments, there may be provided more or less than nine mounting screws 34.

Each of the mounting screws 34 includes a screw head 36 provided with, as shown in the exemplary embodiment depicted in the drawings, an inner hexagonal socket 38. In some embodiments, one of the screw heads 36 may have an inner star socket or any other know shape. In some further embodiments, one of the screw heads may have an outer hexagonal head, an outer star head, or any other known shape for fastening the mounting screws 34.

As further depicted in Fig. 1, the torsional damping device 10 is mounted to the flange member 30 via a plurality of bolts 12. Specifically, a further mounting member 14 is interposed between the torsional damping device 10 and the flange member 30.

The crankshaft 20 includes a crankshaft journal 22 to which a connecting rod (not shown) connecting to a piston may be mounted. An annular gear member 24 configured to drive a camshaft (not shown) is mounted to the crankshaft 20 via, for example, shrink fit. A further gear member 26 configured to drive, for instance, an oil pump (not shown) is mounted to the crankshaft

During operation of the internal combustion engine (not shown in the drawings), the crankshaft 20 with the attached torsional damping device 10 may be exerted to vibrations or alternating loads. Such vibrations or alternating loads may cause, for instance, the mounting screws 34 to at least partially unfasten, such that the mounting screws 34 are no more tightened as desired, for instance, tightened with a predetermined and desired torque or force.

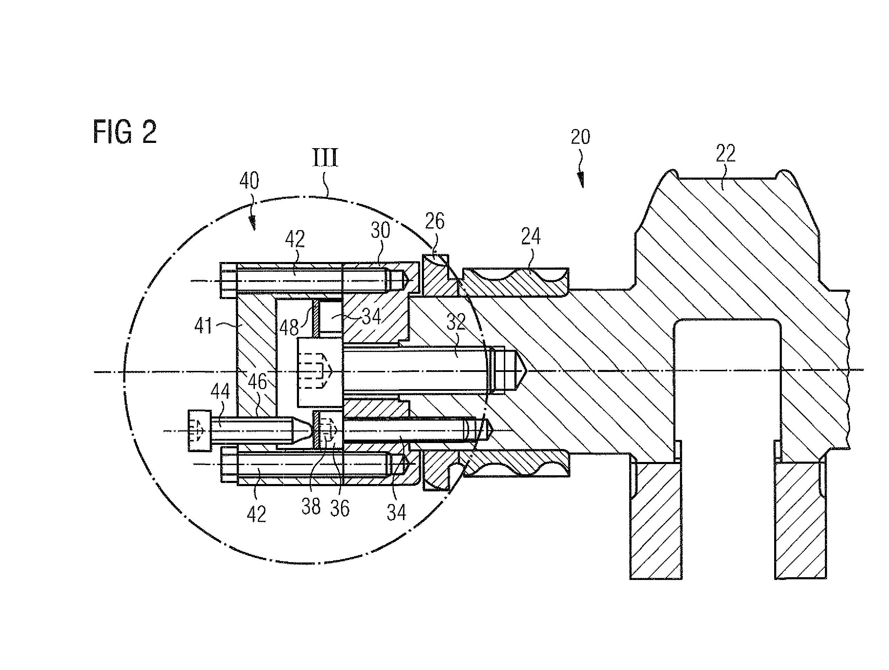

With respect to Fig. 2, a sectional view of the crankshaft 20 and the flange member 30 attached to the crankshaft 20 via the attaching screw 32 and the plurality of mounting screws 34 is illustrated, but the torsional damping device 10 and the mounting member 14 detached from the flange member 30. An anti-rotation device 40 including an attachment member 41 is attached to the flange member 30. Particularly, the attachment member 41 is connected to the flange member 30 via a plurality of screws 42. The screws 42 threadably engage tapped holes provided in the flange member 30, which are already present in the flange member 30 and configured to accommodate the bolts 12 for mounting the torsional damping device 10 to the flange member 30.

The anti-rotation device 40 further includes a plurality of deforming members 44 (only one of which is illustrated in Fig. 2) that are threadably received in tapped holes 46 provided in the attachment member 41. In the embodiment shown in Fig. 2, the deforming members are deforming screws 44.

The anti-rotation member 48 may be configured to lock mounting screws 34 against rotation which have a size ranging from, for example, M4 to M36 and, in some embodiments, up to M52 or greater.

As indicated in Fig. 2, longitudinal axes of the tapped holes 46 are aligned with and parallel to associated longitudinal axes of the mounting screws 34 and, thus, with associated longitudinal axes of tapped holes in the crankshaft 20 that receive the mounting screws 34. In the exemplary embodiment shown in Fig. 2, as there are provided in total nine mounting screws 34, there may also be provided in total nine tapped holes 46 each of which is aligned with an associated mounting screw 34. In some embodiments, in case there are provided more or less than nine mounting screws 34, there may accordingly be provided more or less than nine tapped holes 46. In general, the number of tapped holes 46 may correspond to the number of mounting screws 34.

As further shown in Fig. 2, an anti-rotation member 48 is positioned about the attaching screw 32 and in contact with each of the screw heads 36 of the mounting screws 34. In Fig. 2, the anti-rotation member 48 is a plate-shaped member and is shown in an original non-deformed state, that is prior plastic deformation by the deforming screws 44. For example, the anti-rotation member 48 may have a thickness ranging from about 1.0 mm to about 4.0 mm, particularly from about 1.5 mm to about 2.5 mm. Moreover, the anti-rotation member 48 may be made of, for instance, iron, steel, stainless steel, alumina, or any alloy thereof. In some embodiments, the material of the anti-rotation member 48 may have a high fracture strain.

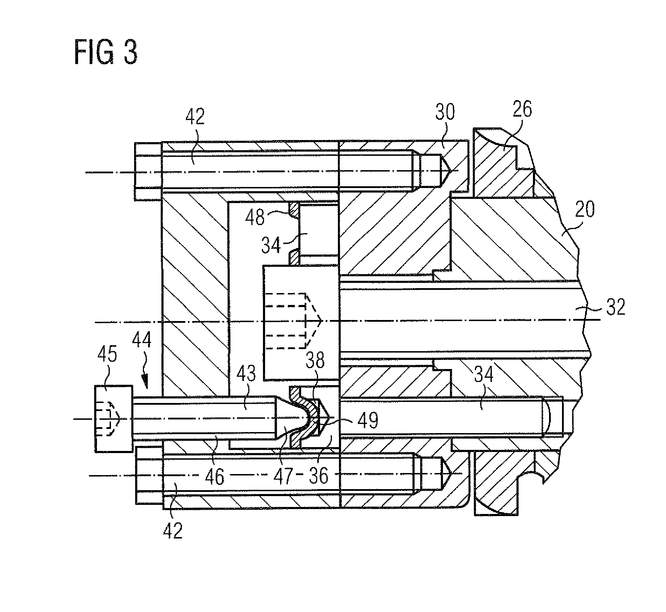

With specific reference to Fig. 3, a detailed view of the portion III of Fig. 2 is illustrated. As can be seen in Fig. 3, the deforming screws 44 include a screw head 45, a threaded portion 43, and a rounded end portion 47 opposite to the screw head 45. The rounded end portion 47 is configured to at least partially plastically deform the anti-rotation member 48, thereby forming a protrusion 49 in the anti-rotation member 48. The protrusion 49 at least partially protrudes into and engages the inner hexagonal socket 38 of the screw head 36 of the associated mounting screw 34.

In particular, when advancing the deforming screw 44 in direction of the mounting screw 34, the rounded end portion 47 of the deforming screw 44 plastically deforms the anti-rotation member 48, thereby forming the protrusion 49. As each of the deforming screws 44 is aligned with an associated mounting screw 34, each of the protrusions 49 at least partially protrudes into and engages an associated inner hexagonal socket 38.

The rounded end portion 47 is sized such that its diameter is substantially smaller than a diameter of the associated hexagonal socket 38. Thus, when driving the anti-rotation member 48 into each of the inner hexagonal sockets 38, each of the protrusions 49 engages the associated inner hexagonal socket 38.

After forming and driving each of the protrusions 49 into an associated inner hexagonal socket 38, the anti-rotation device 40 is disassembled from the flange member 30, wherein the anti-rotation member 48 maintains at its position with the protrusions 49 engaged with the inner hexagonal sockets 38. In some embodiments, the protrusions 49 may be successively formed. In some other embodiments, the protrusions 49 may be simultaneously formed by simultaneously advancing the plurality of deforming screws 44 into the anti-rotation member 48.

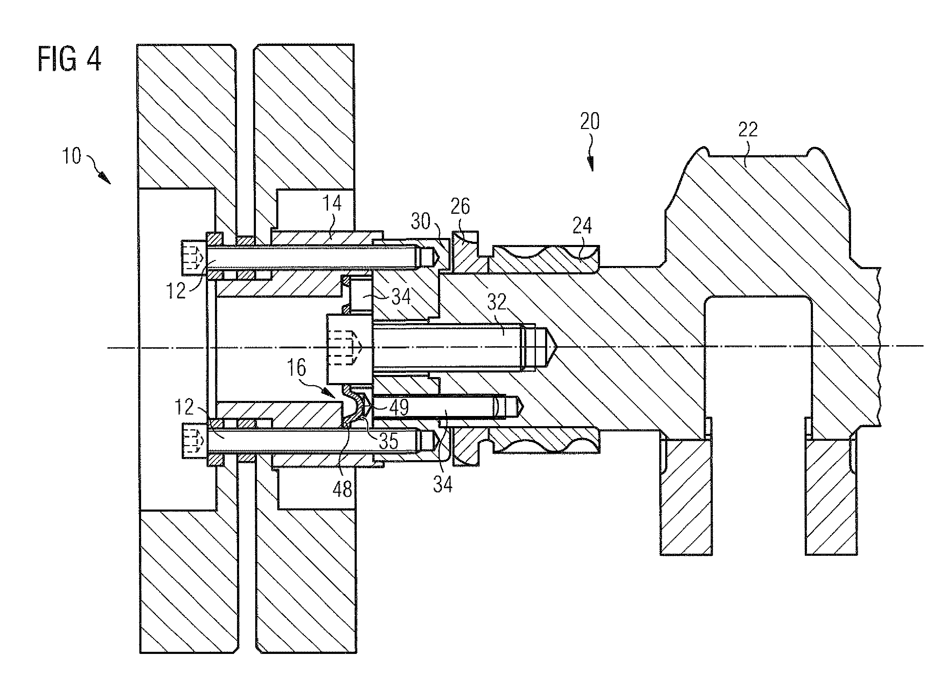

Subsequently, referring to Fig. 4, the attachment member 41 is detached and the torsional damping device 10 is mounted to the flange member 30 via the mounting member 14 and the bolts 12. As shown in Fig. 4, for preventing the anti-rotation member 48 from falling of the screw heads 36, the anti-rotation member 48 is sandwiched between a stepped portion 16 of the mounting member 14 and the screw heads 36 of the mounting screws 34. Therefore, even during operation of the internal combustion engine, each of the mounting screws 34 may maintain in the desired tightened state such that the vibrations or alternating loads of the crankshaft 20 may not unfasten the mounting screws 34.

### Industrial Applicability

The exemplary disclosed method and device for rotationally locking mounting screws is substantially based on engaging an anti-rotation member 48 with screw heads of the screws to be locked against rotation by plastically deforming the anti-rotation member 48. In the exemplary embodiment shown in the drawings, each of the mounting screws 34 includes a screw head 36 with an inner hexagonal socket 38. Therefore, the deforming screw 44 has a rounded end portion 47 for driving the plate-shaped anti-rotation member 48 at least partially into the inner hexagonal socket 38, thereby forming the protrusions 49.

In some embodiments, the mounting screws 34 may include outer hexagonal heads. In such embodiments, instead of the rounded end portion 47, the deforming screws 44 may include, for instance, a nut with a cylindrical recess having, for instance, a circular cross-section. The cylindrical recess may have a diameter substantially greater than the diameter of the outer hexagonal heads, such that the nut may be put over the outer hexagonal head, thereby plastically deforming the anti-rotation member 48 for engaging with the outer hexagonal heads. In such embodiments, the mounting screws 34 are mechanically locked against rotation.

In some further embodiments, the mounting screws 34 may include inner star sockets or outer star heads. In such embodiments, the deforming screws 44 may include the rounded end portion 47 or a nut, respectively, for at least partially deforming the anti-rotation member 48 for engaging with a respective screw head for mechanical locking the mounting screws 34 against rotation.

In some embodiments, instead of using deforming screws 44, the anti-rotation device 40 may include a deforming member which is, for example, hydraulically actuated. For instance, in case of inner hexagonal or inner star sockets, the deforming member may include a rounded end portion which substantially corresponds to the rounded end portion 47 of the deforming screw 44. In case of outer hexagonal heads or outer star heads, the deforming member may include a nut as described above for at least partially plastically deforming the anti-rotation member 48 for engaging with associated screw heads.

In some embodiments, the anti-rotation member 48 may be plastically deformed by, for example, hammering a deformation member onto the anti-rotation member 48 for at least partially engaging with the associated screw heads.

In some embodiments, a screw connection may include screws with different sizes and/or with differently shaped screw heads, such as, for instance, screws with inner hexagonal sockets, screws with outer hexagonal heads, screws with inner star sockets, and/or screws with outer star heads. In such embodiments, the anti-rotation member 48 may engage each of the different sized and shaped screw heads, such that each mounting screw may be locked against rotation.

Although the preferred embodiments of this invention have been described herein, improvements and modifications may be incorporated without departing from the scope of the following claims.

## Claims

1. A method for locking at least two mounting screws (34) against rotation, the at least two mounting screws (34) being configured to connect a first member (30) to a second member (20), each of the two mounting screws (34) having a screw head (36), the method comprising:
disposing a plastically deformable anti-rotation member (48) at each of the screw heads (36) of the at least two mounting screws (34); and
plastically deforming the anti-rotation member (48) such that the anti-rotation member (48) engages the screw heads (36) of the at least two mounting screws (34) for locking the at least to mounting screws (34) against rotation.

2. The method of claim 1, wherein plastically deforming the anti-rotation member (48) includes driving the anti-rotation member (48) at least partially into an associated inner hexagonal socket (38) of one of the at least two mounting screws (34).

3. The method of any one of the preceding claims, wherein plastically deforming the anti-rotation member (48) includes putting the anti-rotation member (48) at least partially over an associated external hexagon head of one of the at least two mounting screws (34).

4. The method of any one of the preceding claims, wherein plastically deforming the anti-rotation member (48) is performed by advancing a deforming screw (44) along a longitudinal axis that is aligned with an associated mounting screw (34).

5. The method of any one of the preceding claims, wherein plastically deforming the anti-rotation member (48) includes hydraulically actuating a deforming member (44) for at least partially deforming the anti-rotation member (48).

6. An anti-rotation member (48) for locking at least two mounting screws (34) against rotation, the at least two mounting screws (34) being configured to connect a first member (30) to a second member (20), each of the two mounting screws (34) having a screw head (36), the anti-rotation member (48) comprising:
at least two protrusions (49) each configured to at least partially match with an associated one of the screw heads (36) for locking the at least to mounting screws (34) against rotation.

7. The anti-rotation member (48) of claim 6, wherein at least one of the at least two protrusions (49) is configured to engage an inner hexagonal socket (38) of at least one of the at least two mounting screws (34).

8. The anti-rotation member (48) of any one claims 6 or 7, wherein at least one of the at least two protrusions (49) is configured to engage an external hexagonal head of at least one of the at least two mounting screws (34).

9. The anti-rotation member (48) of any one of claims 6 to 8, wherein the anti-rotation member (48) is substantially plate-shaped.

10. The anti-rotation member (48) of any one of claims 6 to 9, wherein the anti-rotation member (48) is substantially circular.

11. The anti-rotation member (48) of any one of claims 6 to 10, wherein the anti-rotation member (48) has a thickness ranging from about 1.0 mm to about 4.0 mm, particularly from about 1.5 mm to about 2.5 mm.

12. The anti-rotation member (48) of any one of claims 6 to 11, wherein the anti-rotation member (48) comprises nine protrusions (49) symmetrically disposed about a circle having a predetermined diameter, each of the nine protrusions (49) being configured to at least partially correspond to an associated inner hexagon socket (38) for rotationally locking an associated one of nine mounting screws (34) configured to mount a torsional damping element (10) to a crankshaft (20) of an internal combustion engine.
